# EUROPÄISCHE PATENTSCHRIFT

(11) **EP 0 597 092 B1**
(45) Veröffentlichungstag und Bekanntmachung des Hinweises auf die Patenterteilung: **12.03.1997**
(21) Anmeldenummer: 91910214.5
(22) Anmeldetag: 12.12.1990
(51) Int. Cl.: B01J 2/16

(54) **APPARAT ZUR HERSTELLUNG VON GRANULAT**
APPARATUS FOR OBTAINING GRANULATED PRODUCT
APPAREIL D'OBTENTION D'UN PRODUIT GRANULE

(43) Veröffentlichungstag der Anmeldung: 18.05.1994
(73) Patentinhaber: MOSKOVSKOE NAUCHNO-PROIZVODSTVENNOE OBIEDINENIE KHIMICHESKOGO MASHINOSTROENIA NPO "NIIKHIMMASH", Moscow, 121015 (RU); IVANOV, Oleg Rostislavovich, Moscow, 129278 (RU); SNEGRIREV, Mikhail Iliich, Moscow 107082 (RU); CHISTYAKOV, Mikhail Kuzmich, Moscow, 129344 (RU); RAZHEV, Vladimir Mikhailovich, Uvarovo 393540 (RU); BUDANSTEV, Vladimir Ivanovich, Uvarovo, 393540 (RU)
(72) Erfinder: IVANOV, Oleg Rostislavovich, Moscow, 129278 (RU); SNEGIREV, Mikhail Iliich, Moscow, 107082 (RU); CHISTYAKOV, Mikhail Kuzmich, Moscow, 129344 (RU); RAZHEV, Vladimir Mikhailovich, Uvarovo, 393540 (RU); BUDANTSEV, Vladimir Ivanovich, Uvarovo, 393540 (RU); KIPRIYANOV, Jury Ivanovich, Moscow, 121352 (RU); ZAITSEV, Viktor Alexandrovich, (verstorben) (RU)
(74) Vertreter: Nix, Frank Arnold, Dr.
(86) Internationale Anmeldenummer: SU9000273
(87) Internationale Veröffentlichungsnummer: WO9210283

(56) Entgegenhaltungen:
- SU-A- 201 233
- SU-A- 631 192
- SU-A- 1 411 018
- Khimicheskaya promyshlennost, No. 6, 1967, Khimia (Moscow), G.L. GROSHEV et al., "Nekotorye konstruktivnye osobennosti apparatov s psevdoozhizhennym sloem dlya obezvozhivania rastvorov", page 57, lines 19-34, page 58, figures 4,5.

## Beschreibung

### Technisches Gebiet

Die Erfindung bezieht sich auf Ausrüstungen für die chemische Industrie und betrifft insbesondere Apparate zur Herstellung von Granulat durch Zerstäubung einer Trübe oder einer Schmelze auf der Wirbelschicht eines Dispersionsgutes.

### Zugrundeliegender Stand der Technik

Zur Zeit werden weitgehend Apparate verwendet, in denen der gesamte technologische Vorgang zur Herstellung von Granulat in einer Wirbelschicht durchgeführt wird (US, A, 3735792). Solche Apparate enthalten ein senkrecht angeordnetes zylinderförmiges Gehäuse, einen in seinem oberen Teil tangential angeordneten Gaszuführungsstutzen, ein Gasverteilungsgitter, eine Düse zur Zerstäubung einer Trübe oder einer Schmelze, welche längs der Achse des Gehäuses über der Wirbelschicht liegt, einen Stutzen für die Gaszuführung unter das Gitter, einen Gasabführungsstutzen, der an den oberen Teil des Gehäuses angeschlossen ist, einen Stutzen für die Zuführung des Dispersionsgutes sowie einen Stutzen zum Austragen von Granalien.

Ein Nachteil solcher Wirbelschicht-Apparate besteht darin, dass Dispersionsgut in einem beschränkten Bereich der Korngrößenfraktion verwendet werden muß. Die Konzentration der Teilchen in der zentralen Zone des Apparates, in der sich die Zerstäubung der Trübe oder der Schmelze durch eine Düse vollzieht, ist gering,weil die Teilchen aus dem Zentralstrom in den peripheren Gegenstrom abgeschieden werden, was zu einer Senkung der Leistung des Apparates führt. Einen weiteren Nachteil des Apparates bildet die geringe relative Geschwindigkeit des Gases in der Wirbelschicht, was ebenfalls wegen der begrenzten Wärmemenge, die dem behandelten Gut in der Wirbelschicht zugeführt (bzw. von diesem abgeführt) wird, eine geringe Leistung des Apparates zur Folge hat.

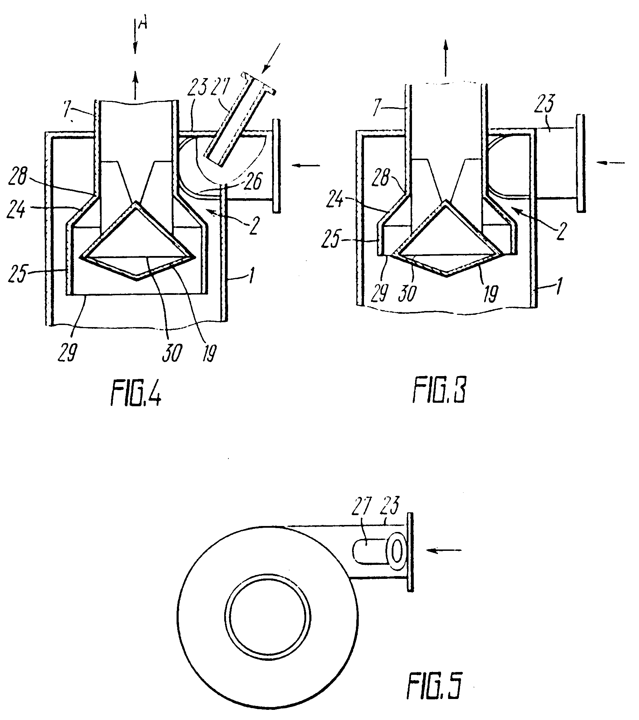

Es ist auch ein Apparat zur Herstellung von Granulat (s.Artikel von Groshev G.D. und andere "Einige konstruktive Besonderheiten von Apparaten mit liegender Wirbelschicht zur Entwässerung von Lösungen", Khimicheskaya promyshlennost" H.6, 1967, S. 58, Fig. 4 und 5) bekannt, der ein senkrecht angeordnetes zylinderförmiges Gehäuse, ein Gasverteilungsgitter, einen in diesem befestigten senkrechten Gaszuführungsstutzen mit einer im Innern desselben angeordneten Düse zur Zerstäubung einer Trübe oder einer Schmelze, einen Stutzen für die Gaszuführung unter das Gitter, einen axialen Gasabführungstutzen, der an den oberen Teil des Gehäuses angeschlossen ist, einen Stutzen für die Zuführung des Dispersionsgutes, einen Stutzen zum Austragen von Granalien aus der Wirbelschicht sowie eine Vorrichtung zur Abscheidung von Granalien aus den Abgasen enthält.

Bei dem bekannten Apparat kann durch die Verwendung des im Gitter befestigten senkrechten Gaszuführungsstutzens die Leistung im Vergleich zu anderen Wirbelschichtapparaten erhöht werden,weil dabei die Gaszuführung in die Wirbelschicht mit hohen Geschwindigkeiten (10 bis 20 m/s) erfolgt, was zur Bildung von lokalen Eruptionszonen führt. Die Leistung eines solchen Apparates ist jedoch begrenzt, weil die Abmessungen des senkrechten Gaszuführungsstutzens und die Geschwindigkeit des durch diesen Stutzen einzuleitenden Gases begrenzt sind. Eine Vergrösserung der Abmessungen des senkrechten Gaszuführungsstutzens oder eine Erhöhung der Geschwindigkeit des durch diesen Stutzen einzuleitenden Gases führen zu einem Austrag von Teilchen aus der Wirbelschicht, zu einer Verminderung der Granalienbildungszentren, zur Störung der Betriebsfähigkeit des Apparates und zu einer Senkung der Leistung. Somit bildet den Hauptnachteil eines solchen Apparates seine geringe Leistung.

### Offenbarung der Erfindung

Der vorliegenden Erfindung liegt die Aufgabe zugrunde, einen solchen Apparat zur Herstellung von Granulat zu entwickeln, dessen Konstruktion es gestattet, den Granuliervorgang durch Erhöhung des in die Wirbelschicht zuzuführenden Gases zu intensivieren, wodurch es möglich wird, die Leistung des Apparates zu steigern, die Verweilzeit der Granalien im Apparat zu verkürzen und auf diese Weise die Qualität des zu gewinnenden Produktes zu verbessern.

Die gestellte Aufgabe wird dadurch gelöst, dass bei einem

Apparat zur Herstellung von Granulat aus einem senkrecht angeordneten zylinderförmigen Gehäuse mit einem Gasverteilungsgitter in seinem unteren Teil,
einem senkrechten Gaszuführungsstutzen, der im Gasverteilungsgitter zur Erzeugung einer Wirbelschicht von Körnchen auf diesem montiert ist,
einem Stutzen für die Zuführung eines Dispersionsgutes, einer Düse zur Zerstäubung einer Trübe oder einer Schmelze, welche im Innern des senkrechten Gaszuführungsstutzens untergebracht ist,
einem axialen Gasabführungsstutzen, der im Oberteil des Gehäuses angeordnet ist, einer Vorrichtung zur Abscheidung von Körnchen aus den Abgasen, einem Stutzen zum Austragen der Körnchen aus der Wirbelschicht und einem Stutzen für die Gaszuführung unter das Gasverteilungsgitter,
erfindungsgemäß der senkrechte Gaszuführungsstutzen längs der Achse des Gehäuses angeordnet ist und seine obere Stirn oberhalb des Gasverteilungsgitters in einem Abstand von diesem liegt, der der im Normalbetrieb vorgesehenen Wirbelbetthöhe entspricht,
das Gasverteilungsgitter mit koaxial angeordneten abgestumpften Kegeln versehen ist, von denen der Innenkegel an der Stirn des senkrechten Gaszuführungsstutzens und der Außenkegel am Gasverteilungsgitter so befestigt ist, daß sich seine obere Stirn unterhalb der Stirn des senkrechten Gaszuführungsstutzens befindet,
wobei in diesem Stutzen ein Rohr mit in ihm eingebautem Wirbler untergebracht ist, das zusammen mit dem Stutzen einen Ringspalt bildet,
und wobei im oberen Teil des Gehäuses vor dem Eintritt zum axialen Gasabführungsstutzen ein Prallkegel vorgesehen ist.

Es ist zweckmässig, dass die Vorrichtung zur Abscheidung von Granalien aus Abgasen in Form eines Zyklonabscheiders ausgebildet wird, dessen Austrittsstutzen mit dem zylinderförmigen Gehäuse oberhalb der Stirn des senkrechten Gaszuführungsstutzens verbunden und mit einem Mittel zum Austragen von Granalien aus dem Zyklonabscheider versehen ist. Der Austrittsstutzen des Zyklonabscheiders wird zweckmässigerweise an das zylinderförmige Gehäuse tangential angeschlossen.

Gemäss einer anderen Ausführungsvariante der Vorrichtung zur Abscheidung von Granalien aus Abgasen wird sie in Form eines zusätzlichen Gaszuführungsstutzens, der mit dem oberen Teil des senkrechten zylinderförmigen Gehäuses tangential verbunden ist, und eines kegelförmigen Trichters, der am axialen Gasabführungsstutzen an der Eintrittsstirn desselben montiert ist und an seinem Ende einen zylinrischen Schuss aufweist, ausgebildet. In den zusätzlichen Gaszuführungsstutzen kann oberhalb seiner unteren Kante ein zusätzlicher Stutzen für die Zuführung des Dispersionsgutes eingebaut werden.

Die untere Stirn des zylindrischen Schusses kann in gleicher Höhe mit der Stirn des Prallkegels oder unterhalb des Prallkegels liegen, wobei es zweckmässig ist, in gleicher Höhe mit der unteren Kante des zusätzlichen Gaszuführungsstutzens die untere Stirn des Gasabführungsstutzens anzuordnen.

Eine solche konstruktive Ausführung des Apparates gestattet es, die Leistung des Apparates wesentlich zu erhöhen und die Qualität des herzustellenden Granulates zu verbessern. Dadurch, dass der senkrechte Gaszuführungsstutzen längs der Achse des Apparates angeordnet ist und seine obere Stirn oberhalb des Gasverteilungsgitters in gleicher Höhe mit der Wirbelschicht liegt, kann auf dem Wege einer Ejektion der Teilchen aus der Wirbelschicht unter der Einwirkung des Gasstromes, welcher durch den senkrechten Gaszuführungsstutzen zugeführt wird, die Teilchenkonzentration im Raum des Apparates oberhalb der Wirbelschicht erhöht und ein dichter Ringvorhang aus dem sich nach oben bewegenden Disperionsgut hergestellt werden. Durch Vergrösserung der Menge und der Geschwindigkeit (die Geschwindigkeit beträgt z.B. 25 bis 50 m/s) des durch den senkrechten Gaszuführungsstutzen einzuleitenden Gases, nimmt die Warmemenge zu, welche (bei der Zerstäubung der Trübe) zugeführt oder (bei der Zerstäubung der Schmelze) vom Dispersionsgut des Ringvorhanges abgeführt wird, was zu einer Erhöhung der Leistung des Apparates führt.

Bei einer Vergrösserung des Abstandes zwischen dem Gitter und der Stirn des senkrechten Gaszuführungsstutzens bis zu einem Wert, der die Höhe der Wirbelschicht überschreitet, nimmt die Menge von Teilchen, welche aus der Wirbelschicht ausgetragen werden, ab; dies hat zur Folge, dass die Trübe oder die Schmelze nicht an den Vorhang aus Dispersionsgut, sondern an die Wand des zylindenförmigen Gehäuses zerstäubt wird, was weiter zu einer Störung der Betriebsfähigkeit des Apparates und zu einer Senkung der Leistung führt, weil sich die Menge von sich nach oben bewegenden Teilchen vermindert, die als Granalienbildungszentren dienen.

Wenn der Abstand zwischen dem Gitter und dem Gaszuführungsstutzen so gewählt ist, dass er kleiner als die Höhe der Wirbelschicht ist, nimmt die Menge von in den Ringvorhang gelangenden Teilchen zu (weil die Höhe der Wirbelschicht dem Stand des Teilchenaustrages entspricht), was zur Überfüllung des Raumes des Apparates mit dem Dispersionsgut führt und das Dispersionsgut in den senkrechten Gaszuführungsstutzen eindringen lässt, weil die kinetische Energie des Stroms für die Beförderung der gesamten Masse des Dispersionsgutes nach oben nicht ausreicht. Das führt zu einer Senkung der Leistung des Apparates, weil es dabei notwendig ist, den senkrechten Gaszuführungsstutzen zu reinigen.

Dadurch, dass oberhalb des Gasverteilungsgitters zwei abgestumpfte Kegel unter Belassen eines Spaltes übereinander angeordnet sind, kann durch die Öffnungen des Gitters in den genannten Spalt Gas eingeleitet werden, das die Teilchen vom unteren Kegel in den Ringvorhang aus dem sich nach oben bewegegenden Dispersionsgut wegbläst. Deshalb bilden sich bei einer Vergrösserung der Gastemperatur keine Ansätze aus dem zu behandelnden Gut an den Wänden des senkrechten Gaszuführungsstutzens, was zu einer Intensivierung des Granuliervorgangs führt. Da die Stirn des oberen Kegels an der Stirn des senkrechten Gaszuführungsstutzens angeordnet ist, nimmt ausserdem die Menge von aus der Wirbelschicht in den Ringvorgang des Dispersionsgutes ausgeblasenen Teilchen zu, was zu einer Vergrösserung der Granalienbildungszentren sowie zu einer Erhöhung der Leistung des Apparates führt.

Dadurch, dass im Innern des senkrechten Gaszuführungsstutzens ein Rohr mit einem in dieses eingebauten Wirbler untergebracht ist, das mit dem Stutzen einen Ringspalt bildet, wird ein Verwirbeln des Zentralstromes gewährleistet, was eine Abscheidung der Teilchen aus dem Zentralstrom in den peripheren Strom bewirkt sowie es ermöglicht, die Geschwindigkeit im senkrechten Gaszuführungsstutzen ohne Vergrösserung des Teilchenaustrages aus dem Raum des Apparates zu erhöhen.

Die Anordnung eines Prallkegels im oberen Teil des Gehäuses vor dem Eintritt zum axialen Gasabführungsstutzen gestattet es, durch Ablenkung des Zentralstromes in den peripheren Bereich und durch Abprallen der Granalien bei deren Aufschlagen auf die Oberfläche des Prallkegels die Granalien in die Wirbelschicht abzuscheiden, was zu einer Vergrösserung der Granalienbildungszentren und zu einer Erhöhung der Leistung des Apparates führt.

Der Aufbau des Zyklonabscheiders zur Abscheidung von Granalien aus Abgasen, bei dem der Austrittsstutzen mit dem zylinderförmigen Gehäuse verbunden ist, gestattet es, in die Wirbelschicht die Granalien zurückzuführen, wobei sich die grösseren Granalien auf dem Gasverteilungsgitter absetzen und aus dem Apparat herausgeführt werden, während die kleineren Granalien aus der Wirbelschicht in den Ringvorhang geblasen werden, was zu einer Erhöhung der Leistung und einer Verbesserung der Eigenschaften des zu gewinnenden Granulates führt, weil der Gehalt des Granulates an kleineren und grösseren Granalien, deren Grösse das Sollmaß überschreitet, reduziert wird.

Durch Erhöhung der Intensität des Granuliervorganges und der Leistung des Apparates werden eine Verkürzung der Verweilzeit des Produktes im Apparat sowie eine Verbesserung der Eigenschaften von Granalien erzielt, was auf eine kürzere Verweilzeit der Granalien in der Zone hoher Geschwindigkeiten und Temperaturen (bei Trocknung/Granulierung) zurückzuführen ist.

Die Anordnung des Stutzens für die Zuführung des Dispersionsgutes im oberen Teil des Gehäuses oberhalb der unteren Kante des tangetial angeordneten Gaszuführungsstutzens führt zu einer gleichmässigen Verteilung des Dispersionsgutes über die Gehäusewand mittels des Gasstromes, der durch den tangetial angeordneten Gaszuführungsstutzen eingeleitet wird, sowie zu einer gleichmässigeren Zuführung des Dispersionsgutes zum Gasverteilungsgitter; dadurch wurden eine Ablagerung des Gutes auf dem Gitter ausgeschlossen und eine Erhöhung der Leistung des Apparates gewährleistet.

Der zusätzliche Gaszuführungsstutzen wird tangential im oberen Teil des Gehäuses angeordnet, und er gewahrleistet bei der Zuführung des Gases durch diesen Stutzen die Erzeugung eines peripheren rotierenden Stromes. Der genannte Strom wird durch einen kegelförmigen Trichter in Richtung der Gehäusewand abgelenkt und durch den zwischen dem zylindrischen Schuss und dem Gehäuse des Apparates vorgesehenen Spalt nach unten längs einer Schraubenlinie geleitet. Der innere Prallkegel lenkt den zentralen Gasstrom in den peripheren Bereich ab, was dazu beiträgt, dass das Drehmoment vom peripheren verdrallten Strom auf den Zentralstrom übertragen und eine Abscheidung des Dispersionsgutes aus dem Zentralstrom in den peripheren Strom gewährleistet werden. Durch den peripheren Gasstrom wird das Dispersionsgut in die Wirbelschicht zurückgeführt.

Auf diese Weise werden durch den zusätzlichen Gaszuführungsstutzen, den kegelförmigen Trichter, den zylindrischen Schuss und den Innenkegel Gasströme im Apparat ausgebildet,welche eine Rückführung der Teilchen, eine Vergrösserung der Masse des Dispersionsgutes im Raum des Apparates und als Folge eine Erhöhung der Leistung gewährleisten.

Bei der Anordnung der Stirnenden des zylindrischen Schusses und des Innenkegels in gleicher Höhe vollzieht sich die Übertragung des Drehmomentes vom peripheren verdrallten Strom zum Zentralstrom nach dem Austritt des peripheren Stromes aus dem Spalt zwischen dem zylindrischen Schuss und dem Gehäuse, so dass die Energie des peripheren Gasstromes besonders vollständig zur Abscheidung von Teilchen aus dem Zentralstrom in den peripheren Strom ausgenutzt wird, was zu einer Vergrösserung der Menge von im Raum des Apparates umlaufenden Teilchen sowie zu einer Erhöhung der Leistung führt.

Die Anordnung der Stirn des zylindrischen Schusses unterhalb der Stirn des Innenkegels führt zu einer Verminderung des Austrages des Dispersionsgutes, das durch den Spalt zwischen dem zylindrischen Schuss und dem Gehäuse des Apparates zugeführt wird, durch die Abgase. Dabei werden die Teilchenkonzentration im Raum des Apparates und die Leistung des Apparates erhöht.

Bei Anordnung des Stutzens für die Zuführung des Dispersionsgutes im Innern des tangential angeordneten Gaszuführungsstutzens nimmt die Gleichmässigkeit der Teilchenverteilung über die Wand des Gehäuses zu, was zu einer Erhöhung der Leistung des Apparates beiträgt.

Bei Anordnung der Schnittfläche des Gesabführungsstutzens in gleicher Höhe mit der unteren Kante des tangential angeordneten Gaszuführungsstutzens vollzieht sich die Ausbildung des peripheren rotierenden Stromes mit minimalen Druckverlusten durch Reibung, was ebenfalls zu einer Erhöhung der Leistung führt.

### Kurze Beschreibung der Zeichnungen

Nachstehend wird die Erfindung durch eingehende Beschreibung eines Ausführungsbeispiels unter Bezugnahme auf die beigefügten Zeichnungen erläutert. Es zeigen:
Fig. 1 die Gesamtansicht eines erfindungsgemässen Apparates zur Herstellung von Granulat, im Teillängsschnitt;
Fig. 2 den Schnitt nach Linie II-II der Fig. 1;
Fig. 3 eine Ausführungsvariante der Vorrichtung zur Abscheidung von Granalien aus Abgasen;
Fig. 4 eine andere Ausführungsvariante der Vorrichtung zur Abscheidung von Granalien aus Abgasen;
Fig. 5 die Ansicht in Pfeilrichtung A gemäss Fig. 4.

### Beste Ausführungsform der Erfindung

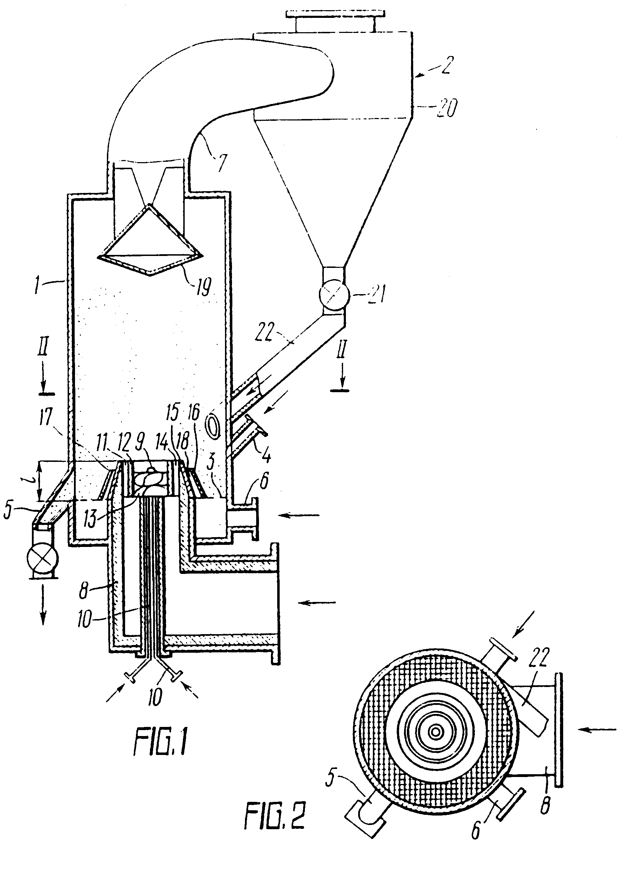

Der erfindungsgemässe Apparat zur Herstellung von Granulat enthält ein senkrecht angeordnetes zylinderförmiges Gehäuse 1 (Fig. 1), dessen oberer Teil mit einer Vorrichtung 2 zur Abscheidung von Granalien aus Abgasen verbunden ist, während im unteren Teil ein Gasverteilungsgitter 3 zur Erzeugung einer Wirbelschicht untergebracht ist. Der Apparat enthält auch einen Stutzen 4 für die Zuführung des Dispersionsgutes, einen Stutzen 5 zum Austragen von Granalien aus der Wirbelschicht, einen Stutzen 6 für die Zuführung des Gases unter das Gasverteilungsgitter 3 sowie einen axialen Gesabführungsstutzen 7, welcher an den oberen Teil des Gehäuses 1 angeschlossen ist, einen senkrechten Gaszuführungsstutzen 8, der längs der Achse des Gehäuses angeordnet und im Gitter 3 befestigt ist.

Der Gaszuführungsstutzen 8 ist mit einer in seinem Innern angeordneten Düse 9 zur Zerstäubung einer Trübe oder einer Schmelze versehen, welche durch Stutzen 10 zugeführt wird. Die obere Stirn 11 des Gaszuführungstutzens 8 ist oberhalb des Gasverteilungsgitters 3 in einem Abstand ℓ angeordnet, der der Höhe der zu erzeugenden Wirbelschicht gleich ist. Im Innern des Gaszuführungsstutzens 8 ist ein Rohr 12 untergebracht, dessen obere Stirn in gleicher Höhe mit der Stirn 11 des Gaszuführungsstutzens 8 liegt. In das Rohr 12 ist ein Wirbler 13 einer bekannten Konstruktion eingebaut, wobei das Rohr 12 mit dem Stutzen einen Ringspalt 14 bildet.

Das Gasverteilungsgitter 3 ist mit koaxial angeordneten abgestumpften Kegeln 15 und 16 versehen, wobei der Innenkegel 15 an der oberen Stirn 11 des Gaszuführungsstutzens 8 befestigt ist, während der Aussenkegel 16 mit seiner unteren Stirn auf dem Gasverteilungsgitter 3 befestigt ist und eine Höhe aufweist, die kleiner als die Höhe des Kegels 15 ist, so dass die obere Stirn 17 dieses Kegels 15 unterhalb der oberen Stirn 11 des Stutzens 8 liegt. Dabei sind die Kegel 15, 16 so angeordnet, dass der zwischen ihnen gebildete Ringspalt 18 eine zu ihren oberen Stirnen gerichtete Verjüngung aufweist.

Im oberen Teil des Gehäuses 1 ist vor dem Eintritt zu dem axialen Gasabführungsstutzen 7 ein Prallkegel 19 angeordnet.

Die Vorrichtung 2 zur Abscheidung von Granalien aus Abgasen kann unterschiedliche konstruktive Ausführungen aufweisen. So ist gemäss Fig. 1 die Vorrichtung 2 in Form eines Zyklonabscheiders 20 einer bekannten Bauart ausgebildet, der mit einem Mittel 21 zum Austragen von Granalien aus dem Abscheider versehen ist, welches Mittel z.B. als Aufgabeschleuse ausgeführt werden oder eine beliebige andere Konstruktion haben kann. Der Austrittsstutzen 22 des Zyklonabscheiders 20 ist mit dem zylinderförmigen Gehäuse 1 oberhalb der oberen Stirn 11 des senkrechten Gaszuführungsstutzens 8 verbunden, wobei dieser Austrittsstutzen 22 mit dem zylinderförmigen Gehäuse tangential verbunden werden kann, wie das in Fig. 2 dargestellt ist (d.h. längs einer Tangente an seinen Umfangskreis).

Gemäss Figuren 3, 4 ist die Vorrichtung 2 in Form eines zusätzlichen Gaszuführungsstutzens 23, der mit dem oberen Teil des senkrechten zylinderförmigen Gehäuses 1 (Fig. 5) tangential verbunden ist, eines kegelförmigen Trichters 24 (Fig. 3,4) mit einem zylinderförmigen Schuss 25 an dessen Ende ausgebildet. Der kegelförmige Trichter 24 ist am axialen Gasabführungsstutzen 7 an seinem Austritt montiert.

In den zusätzlichen Gaszuführungsstutzen 23 ist oberhalb seiner unteren Kante 26 ein zusätzlicher Stutzen 27 für die Zuführung des Dispersionsgutes eingebaut, wobei die untere Kante 26 des Gaszuführungsstutzens 23 in gleicher Höhe mit der Stirn 28 des Eintrittes des Gasabführungsstutzens 7 liegt.

Die untere Stirn 29 des Schusses 25 liegt in gleicher Höhe mit der Stirn 30 des Prallkegels 19 (Fig. 3). Dabei wird bei der Montage des zusätzlichen Stutzens 27 für die Zuführung des Dispersionsgutes im Stutzen 23 die untere Stirn 29 des Schusses 25 unterhalb der Stirn 30 des Prallkegels 19 (wie das in Fig. 4 wiedergegeben ist) angeordnet.

Der erfindungsgemässe Apparat hat folgende Wirkungsweise.

In das zylinderförmige Gehäuse 1 (Fig. 1) werden über den Stutzen 4 Granalien eingebracht. Durch einen Gasstrom, der über den Stutzen 6 und die Öffnungen des Gitters eingeleitet wird, wird eine Wirbelschicht aus Granalien erzeugt. Eine Ejektion dieser Granalien aus der Wirbelschicht wird mittels eines Gasstromes vorgenommen, der über den zwischen dem Stutzen 8 und dem Rohr 12 vorgesehenen Spalt 14 unter Bildung eines Ringvorhanges aus den sich nach oben bewegenden Granalien oberhalb der Wirbelschicht eingeleitet wird.

Durch den über den Spalt 18 zwischen den Kegeln 15 und 16 eingeleiteten Gasstrom werden ebenfalls Granalien aus der Wirbelschicht in den Ringvorhang geblasen. Auf die Granalien des Ringvorhanges wird durch die Düse 9 eine Trübe (eine Lösung) bei der Zuführung eines Heissgases durch den Stutzen 8 und Durchführung einer Trocknung und Granulierung oder eine Schmelze bei der Zuführung eines Kaltgases und Durchführung einer Granulierung durch Abkühlung der Schmelze zerstäubt. Der durch den Stutzen 8 und den Wirbler 13 eingeleitete Gasstrom gewahrleistet eine gleichmässige Zerstäubung der durch die Düse eingeführten Trübe (oder der Schmelze).

Bei der Bewegung der Granalien im Ringspalt nach oben findet deren Erwärmung (bei der Zerstäubung der Trübe) oder deren Abkühlung (bei der Zerstäubung der Schmelze) durch Wärmeübertragung vom durch den Spalt 14 und den Wirbler 13 eingeleiteten Zentralstrom statt. Die kleineren Granalien werden durch Trocknung oder Abkühlung von kleineren Tropfen der Lösung oder der Schmelze gebildet, welche sich ihrerseits bei der Zerstäubung der Lösung oder der Schmelze durch die Düse 9 gebildet haben. Die Granulierung erfolgt durch eine Vergrösserung kleinerer Granalien, welche mit einem Trübe- oder einem Schmelzefilm überzogen sowie getrocknet oder durch Wärmeübertragung von Granalien und vom zentralen Gasstrom kristallisiert werden.

Die kleineren Granalien zirkulieren zwischen dem Ringvorhang und der Wirbelschicht, während die grösseren Granalien aus dem Apparat herausgeführt werden, indem sie sich auf dem Gitter 3 in der Wirbelschicht absetzen und von diesem Gitter über den Stutzen 5 ausgetragen werden.

Die Abscheidung von Granalien aus dem zentralen Gasstrom erfolgt unter Einwirkung des verwirbelten Gasstromes, der über den Wirbler 13 eingeleitet wird, und des Prallkegels 19, welche den Zentralstrom in den peripheren Bereich ablenken, so dass die Granalien in die Wirbelschicht unter Einwirkung der Schwerkraft fallen. Die Granalien werden von dem austretenden Gas auch durch Abprallen beim Aufschlagen der Granalien auf die Oberfläche des Prallkegels 19 und im Zyklonabscheider 20 abgetrennt, aus welchem sie über den Stutzen 22 in die Wirbelschicht geleitet werden.

Bei der Gaszuführung über den tangential angeordneten Gaszuführungsstutzen 23 (Fig. 3, 4) wird ein peripherer drallbehafteter Strom erzeugt, der durch den Spalt zwischen dem Gehäuse 1 und dem zylindrischen Schuss geleitet wird und dazu beiträgt, dass Granalien aus dem Zentralstrom in den peripheren Strom abgeschieden in die Wirbelschicht zuruckgeführt werden.

Bei Prüfungen des erfindungsgemässen Apparates wurde festgestellt, dass bei einer Vergrösserung des Abstandes zwischen dem Gasverteilungsgitter und der Stirn des senkrechten Gaszuführungsstutzens bis zu einem Wert grösser als die Höhe der sich bildenden Wirbelschicht (das wurde durch eine Vergrösserung des Stromes der aus dem Apparat auszutragenden Teilchen erreicht), im Versuch eine Störung der Betriebsfähigkeit des Apparates zu verzeichnen war, weil die Temperatur der Abgase auf 140 bis 150°C anstieg und sich an den Wänden des Apparates Ansätze bildeten, was eine Reinigung der Wände des Apparates erforderlich machte und zu einer Senkung der Leistung führte. Bei einer Verminderung des genannten Abstandes bis zu einem Wert kleiner als die Höhe der Wirbelschicht (das wurde durch eine Verminderung des Stromes der aus dem Apparat auszutragenden Teilchen erzielt), war im Versuch eine Druckpulsation des in den senkrechten Gaszuführungsstutzen zugeführten Gases zu verzeichnen. Dabei gelangte das zu behandelnde Gut in den Stutzen, was eine Reinigung des Stutzens erforderlich machte und zu einer Senkung der Leistung des Apparates führte.

Auf diese Weise gestattet die erfindungsgemässe Konstruktion des Apparates es, durch eine Intensivierung des technologischen Prozesses (der Trocknung oder der Abkühlung) und eine gerichtete Bewegung der Gasströme, die Leistung des Apparates wesentlich zu erhöhen, die Wärmeabgabe in die Umgebung zu vermindern und dementsprechend die Qualität des zu gewinnenden Produktes zu verbessern.

So z.B. beträgt bei der Produktion von Monoammoniumphosphat die spezifische Leistung des beschriebenen Apparates, bezogen auf die eingedampfte Feuchte, 340 bis 370 kg/m³·h, was um ein 5- bis 6faches die spezifische Leistung der bekannten Wirbelschichtapparate zur Herstellung von Granulat übertrifft.

### Gewerbliche Verwertbarkeit

Die vorliegende Erfindung kann in der chemischen Industrie, im Hüttenwessen, bei der Produktion von Baustoffen, in der Lebensmittelindustrie, in der pharmazeutischen Industrie und in anderen benachbarten Industriezweigen ihre Anwendung finden.

## Patentansprüche

1. Apparat zur Herstellung von Granulat aus einem senkrecht angeordneten zylinderförmigen Gehäuse (1) mit einem Gasverteilungsgitter (3) in seinem unteren Teil,
einem senkrechten Gaszuführungsstutzen (8), der im Gasverteilungsgitter (3) zur Erzeugung einer Wirbelschicht von Körnchen auf diesem montiert ist,
einem Stutzen (4) für die Zuführung eines Dispersionsgutes, einer Düse (9) zur Zerstäubung einer Trübe oder einer Schmelze, welche im Innern des senkrechten Gaszuführungsstutzens (8) untergebracht ist,
einem axialen Gasabführungsstutzen (7), der im Oberteil des Gehäuses (1) angeordnet ist, einer Vorrichtung (2) zur Abscheidung von Körnchen aus den Abgasen, einem Stutzen (5) zum Austragen der Körnchen aus der Wirbelschicht und einem Stutzen (6) für die Gaszuführung unter das Gasverteilungsgitter (3),
dadurch **gekennzeichnet**, daß der senkrechte Gaszuführungsstutzen (8) längs der Achse des Gehäuses (1) angeordnet und seine obere Stirn (11) oberhalb des Gasverteilungsgitters (3) in einem Abstand (l) von diesem liegt, der der im Normalbetrieb vorgesehenen Wirbelbetthöhe entspricht,
daß das Gasverteilungsgitter (3) mit koaxial angeordneten abgestumpften Kegeln (15, 16) versehen ist, von denen der Innenkegel (15) an der Stirn (11) des senkrechten Gaszuführungsstutzens (8) und der Außenkegel (16) am Gasverteilungsgitter (3) so befestigt ist, daß sich seine obere Stirn (17) unterhalb der Stirn (11) des senkrechten Gaszuführungsstutzens (8) befindet,
wobei in diesem Stutzen (8) ein Rohr (12) mit in ihm eingebautem Wirbler (13) untergebracht ist, das zusammen mit dem Stutzen (8) einen Ringspalt (14) bildet,
und daß im oberen Teil des Gehäuses (1) vor dem Eintritt zum axialen Gasabführungsstutzen (7) ein Prallkegel (19) vorgesehen ist.

2. Apparat zur Herstellung von Granulat nach Anspruch 1, dadurch **gekennzeichnet**, dass die Vorrichtung (2) zur Abscheidung von Granalien aus den Abgasen in Form eines Zyklonabscheiders (20) ausgebildet ist, dessen Austrittsstutzen (22) mit dem zylinderförmigen Gehäuse (1) oberhalb der Stirn (11) des senkrechten Gaszuführungsstutzens (8) verbunden und mit einem Mittel (21) zum Austragen von Granalien aus dem Zyklonabscheider versehen ist.

3. Apparat zur Herstellung von Granulat nach Anspruch 2, dadurch **gekennzeichnet**, dass der Austrittsstutzen (22) des Zyklonabscheiders (20) an das zylinderförmige Gehäuse (1) tangential angeschlossen ist.

4. Apparat zur Herstellung von Granulat nach Anspruch 1, dadurch **gekennzeichnet**, dass die Vorrichtung (2) zur Abscheidung von Granalien aus Abgasen in Form eines zusätzlichen Gaszuführungsstutzens (23), der mit dem oberen Teil des senkrechten zylinderförmigen Gehäuses (1) tangential verbunden ist, und eines kegelförmigen Trichters (24), der an axialen Gasabführungsstutzen (7) an der Eintrittsstirn desselben montiert ist und an seinem Ende einen zylindrischen Schuss (25) aufweist, ausgebildet ist.

5. Apparat zur Herstellung von Granulat nach Anspruch 4, dadurch **gekennzeichnet**, dass in den zusätzlichen Gaszuführungsstutzen (23) oberhalb seiner unteren Kante (26) ein zusätzlicher Stutzen (27) für die Zuführung des Dispersionsgutes eingebaut ist.

6. Apparat zur Herstellung von Granulat nach Anspruch 4, dadurch **gekennzeichnet**, dass die untere Stirn (29) des zylindrischen Schusses (25) in gleicher Höhe mit der Stirn (30) des Prallkegels (19) liegt.

7. Apparat zur Herstellung von Granulat nach Ansprüchen 4, 5, dadurch **gekennzeichnet**, dass die untere Stirn (29) des zylindrischen Schusses (25) unterhalb der Stirn (30) des Kegels (19) liegt.

8. Apparat zur Herstellung von Granulat nach Ansprüchen 1, 4, dadurch **gekennzeichnet**, dass in gleicher Höhe mit der unteren Kante (26) des zusätzlichen Gasuführungsstutzens (23) die Eintrittsstirn des Gasabführungsstutzens (7) liegt.

## Claims

1. An apparatus for producing granulated products, comprising a vertical cylindrical casing (1) with a gas-distributing grating (3) in the lower part thereof,
a vertical gas-supplying pipe (8) mounted in the gas-distributing grating (3) for creating a fluidized bed of granules thereon,
a pipe (4) for supplying disperse materials, a nozzle (9) for spraying a pulp or a melt, disposed inside the vertical gas-supplying pipe (8),
an axial gas-discharging pipe (7) disposed in the upper part of the casing (1), a device (2) for separating the granules from the effluent gases, a pipe (5) for discharging the granules from the fluidized bed, and a pipe (6) for supplying gas under the gas-distributing grating (3),
characterized in that the vertical gas-supplying pipe (8) is arranged along the axis of the casing (1) and its upper end face (11) is disposed above the gas-distributing grating (3) in a distance from the same which corresponds to the height of the fluidized bed in normal operation,
the gas-distributing grating (3) being provided with coaxially disposed truncated cones (15, 16) of which the internal one (15) is secured on the end face (11) of the vertical gas-supplying pipe (8) and the external one (16) is secured on the gas-distributing grating (3) so that its end face (17) is located below the end face (11) of the vertical gas-supplying pipe (8),
wherein in this pipe (8) a tube (12) with a built-in swirler (13) is disposed, which, together with the pipe (8) forms an annular gap (14),
and with a baffle cone (19) being installed in the upper part of the casing (1) in front of the entrance into the axial gas-discharging pipe (7).

2. An apparatus for producing granulated products according to Claim 1,
characterized in that the device (2) for isolating granules from the effluent gases is made as a cyclone (20) whose outlet pipe (22) is communicated with the cylindrical casing (1) above the end face (11) of the vertical gas-supplying pipe (8) and which is provided with a means (21) for discharging the granules from the cyclone.

3. An apparatus for producing granulated products according to Claim 2, characterized in that the outlet pipe (22) of the cyclone (20) is connected with the cylindrical casing (1) tangentially.

4. An apparatus for producing granulated products according to Claim 1, characterized in that the device (2) for isolating granules from effluent gases is made in the form of an additional gas-supplying pipe (23), tangentially connected with the upper part of the vertical cylindrical casing (1), and a conical funnel (24) mounted on the axial gas-discharging pipe (7) on the end face of the inlet thereof and having a cylindrical shall (25) at the end.

5. An apparatus for producing granulated products according to Claim 4, characterized in that an additional pipe (27) for supplying a disperse material is mounted into the additional gas-supplying pipe (23) above the lower edge (26) thereof.

6. An apparatus for producing granulated products according to Claim 4, characterized in that the lower end face (28) of the cylindrical shell (25) is disposed on the level of an end face (29) of the baffle cone (19).

7. An apparatus for producing granulated products according to Claims 4, 5, characterized in that the lower end face (28) of the cylindrical shell (25) is disposed below the end face (29) of the cone (19).

8. An apparatus for producing granulated products according to Claims 1, 4, characterized in that the end face of the inlet of the gas-discharging pipe (7) is disposed level with the lower edge (26) of the additional gas-supplying pipe (23).

## Revendications

1. Appareil pour obtenir des produits granulés comprenant un corps cylindrique vertical (1) ayant une grille de distribution de gaz (3) dans sa partie inférieure,
une tubulure d'arrivée de gaz verticale (8) montée dans la grille de distribution de gaz (3) pour créer sur celle-ci un lit fluidisé de granules,
une tubulure d'arrivée de matériaux dispersée (4), un injecteur (9) destiné à pulvériser une pulpe ou un bain fondu et disposé à l'intérieur de la tubulure d'arrivée de gaz verticale (8),
une tubulure d'évacuation de gaz axiale (7) disposée dans la partie supérieure du corps (1), un dispositif (2) destiné à séparer les granules à partir des gaz à évacuer, une tubulure (5) pour le déchargement des granules à partir du lit fluidisé et une tubulure (6) pour l'amenée de gaz sous la grille de distribution de gaz (3),
caractérisé en ce que la tubulure d'arrivée de gaz verticale (8) est montée suivant l'axe du corps (1) de telle façon que son bout supérieur (11) soit disposé au-dessus de la grille de distribution de gaz (3) dans une distance correspondante a la hauteur du lit fluidisé en fonctionnement normal,
tandis que la grille de distribution de gaz (3) est dotée de cônes tronqués coaxiaux (15, 16), le cône intérieur (15) desquels est fixé sur le bout (11) de la tubulure d'arrivée de gaz verticale (8) et le cône extérieur (16) est fixé sur la grille de distribution de gaz (3) de telle façon que son bout supérieur (17) soit disposé au-dessous du bout (11) de la tubulure d'arrivée de gaz verticale (8),
une tube (12) abritant un tourbilloneur (13) étant disposée à l'intérieur de cette tubulure (8) est montée de façon à former un jeu annulaire (14) avec la tubulure (8),
tandis qu'un cône de détachement (19) est monté dans la partie supérieure du corps (1) en amont de l'entrée dans la tubulure d'évacuation de gaz axiale (7).

2. Appareil pour obtenir des produits granulés suivant la revendication 1, caractérisé en ce que le dispositif (2) destiné à séparer les granules à partir des gaz à évacuer est réalisé sous la forme d'une cyclone (20) dont la tubulure de sortie (22) est communiquée avec le corps cylindrique (1) au-dessus du bout (11) de la tubulure d'arrivée de gaz verticale (8) et est munie d'un moyen (21) pour décharger les granules du cyclone (20).

3. Appareil pour obtenir des produits granulés suivant la revendication 2, **caractérisé** en ce que la tubulure de sortie (22) du cyclone (20) est reliée au corps cylindrique (1) de façon tangentielle.

4. Appareil pour obtenir des produits granulés suivant la revendication 1, **caractérisé** en ce que le dispositif (2) destiné à séparer las granules à partir des gaz à évacuer est réalisé sous la forme d'une tubulure d'arrivée, de gaz supplémentaire (23) qui est reliée de façon tangentielle à la partie supérieure du corps cylindrique vertical (1), et d'un entonnoir conique (24) monté sur le bout d'entrée de la tubulure d'évacuation de gaz axiale (7) et ayant une virole cylindrique (25) sur sa extrémité.

5. Appareil pour obtenir des produits granulés suivant la revendication 4, **caractérisé** en ce que dans la tubulure d'arrivée de gaz supplémentaire (23) au-dessus de son bord inférieur (26) est montée une tubulure d'arrivée de matériaux dispersés supplémentaire (27).

6. Appareil pour obtenir des produits granulés suivant la revendication 4, **caractérisé** en ce que le bout inférieur (28) de la virole cylindrique (25) est disposé au niveau du bout (29) du cône de détachement (19).

7. Appareil pour obtenir des produite granules suivant les revendications 4 et 5, **caractérisé** en ce que le bout inférieur (28) de la virole cylindrique (25) est disposé plus bas que le bout (29) du cône de détachement (19).

8. Appareil pour obtenir des produits granulés suivant les revendications 1 et 4, **caractérisé** en ce que le bout d'entrée de la tubulure d'évacuation de gaz (7) est disposé au niveau du bord inférieur (26) de la tubulure d'arrivée de gaz supplémentaire (23).
